# EUROPÄISCHE PATENTSCHRIFT

(11) **EP 1 488 993 B1**
(45) Veröffentlichungstag und Bekanntmachung des Hinweises auf die Patenterteilung: **10.01.2007**
(21) Anmeldenummer: 03017840.4
(22) Anmeldetag: 05.08.2003
(51) Int. Cl.: B62L 3/08, B60T 8/26

(54) **Kombinationsbremsanlage**
Combined brake system
Système de freinage combiné

(30) Priorität: 16.06.2003 DE 20309375 U
(43) Veröffentlichungstag der Anmeldung: 22.12.2004
(73) Patentinhaber: Biria, Mehdi, 69118 Heidelberg (DE)
(72) Erfinder: Biria, Mehdi, 69118 Heidelberg (DE)
(74) Vertreter: Böck, Bernhard

(56) Entgegenhaltungen:
- DE-A- 3 729 145
- DE-A- 4 216 461
- FR-A- 869 813
- US-A- 4 102 439

## Beschreibung

Die Erfindung betrifft eine Kombinationsbremsanlage für Zweiräder gemäß dem Oberbegriff des Patentanspruchs 1.

Kombinationsbremsanlagen der eingangs genannten Art dienen der sicheren und einfacheren Betätigung der Radbremsen insbesondere bei Fahrrädern. Hierzu wird bei gattungsgemäßen Kombinationsbremsanlagen das beim Bremsen entstehende Reaktionsmoment einer konventionell per Handhebel betätigten Hinterradbremse zur Betätigung der Vorderradbremse herangezogen.

Es lässt sich auf diese Weise durch Betätigen lediglich eines Bremshebels eine Bremsung beider Räder einleiten. Zudem führt die Verwendung des beim Bremsen anfallenden Reaktionsmoments der Hinterradbremse für die Betätigung der Vorderradbremse zu einem Servoeffekt, der eine starke Bremswirkung auch bei lediglich geringen Betätigungskräften erlaubt. Im Hinblick auf die Fahrsicherheit sind gattungsgemäße Kombinationsbremsanlagen zudem besonders vorteilhaft, insofern als sie einen gewissen ABS-Effekt ermöglichen. Dieser Antiblockier-Effekt entsteht dadurch, dass beim Blockieren des Vorderrads das Hinterrad entlastet wird, wodurch auch das Reaktionsmoment der Hinterradbremse abnimmt. Dies führt wiederum zu einer verringerten Bremswirkung der von diesem Reaktionsmoment betätigten Vorderradbremse, was die Blockierung des Vorderrads aufhebt.

Im praktischen Einsatz der beispielsweise aus der DE 37 29 145 bekannten Kombinationsbremsanlagen tritt jedoch das Problem auf, dass diese, ebenso wie die aus dem Kraftfahrzeug bekannten Antiblockiersysteme, in noch verstärktem Maße zum Stottern, Ruckeln und Aufschwingen neigen, was je nach Fahrbahnbeschaffenheit wiederum ein Sicherheitsrisiko darstellt.

Zur Lösung dieses Problems ist vorgeschlagen worden, beispielsweise durch die DE 42 16 461, einen hydraulischen Dämpfer so in das System der Bremsanlage einzubinden, dass ruckartige Bewegungen der Bremskomponenten bzw. die Entstehung und das Aufschaukeln von Schwingungen gedämpft oder unterbunden werden. Der Nachteil des Einsatzes eines hydraulischen Dämpfers liegt jedoch insbesondere darin, dass dieser das Bremssystem unverhältnismäßig aufwändig und damit teuer macht. Damit wird der an sich wünschenswerte Einsatz der gattungsgemäßen, der Sicherheit dienenden Bremssysteme bei einer Vielzahl von Fahrrädern im unteren und mittleren Preisbereich verunmöglicht.

Es ist daher Aufgabe der vorliegenden Erfindung, eine Kombinationsbremsanlage zu schaffen, bei der ruckartiges Ansprechen bzw. die unerwünschte Entstehung von Schwingungen wirksam unterbunden wird, ohne dass hierzu beispielsweise aufwändige hydraulische Bauelemente erforderlich sind.

Diese Aufgabe wird durch eine Kombinationsbremsanlage nach der Lehre des Patentanspruchs 1 gelöst.

Bevorzugte Ausführungsformen der Erfindung sind Gegenstand der Unteransprüche.

In an sich zunächst bekannter Weise umfasst die erfindungsgemäße Kombinationsbremsanlage eine manuell, beispielsweise durch Handbremshebel oder Pedalrücktritt, betätigbare, am Hinterrad angeordnete Nabenbremse sowie eine Vorderradbremse, beispielsweise eine Felgenbremse, die durch das Bremsmoment der Hinterradnabenbremse betätigbar ist.

Erfindungsgemäß zeichnet sich die in Rede stehende Kombinationsbremsanlage jedoch dadurch aus, dass die Kraftübertragung vom Momentenwiderlager der Nabenbremse zur Vorderradbremse über ein degressives Kniehebelgetriebe erfolgt. Dabei wird das Kniehebelgetriebe im Bereich nahe seiner Strecklage betrieben.

Die Verwendung eines Kniehebelgetriebes, das zudem nahe seiner Strecklage betrieben wird, ermöglicht es, eine Kennlinie des Gesamtsystems zu erhalten, die ohne Notwendigkeit hydraulischer Dämpfungselemente die Entstehung unerwünschter Bremsrucke bzw. das Aufschaukeln von Vibrationen und Schwingungen äußerst wirkungsvoll verhindert. Ein Kniehebelgetriebe im Bereich seiner Strecklage besitzt vor allem die Eigenschaft einer extrem hohen Kraftübersetzung, was für den vorliegenden Fall sogar bedeutet, dass in der Strecklage des Kniehebelgetriebes die Eingangskräfte beliebig hoch werden können, ohne dass sich die Ausgangskraft weiter erhöht.

Bereits hierdurch wird die Neigung zum Stottern oder Schwingen des Bremssystems entscheidend verringert, da starkes Ansprechen der Hinterradbremse nicht zu einem ebenso starken Ansprechen der Vorderradbremse führt. Dies wird erreicht, ohne dass zu dem so erzielten Kraftbegrenzungseffekt ein separates Kraftbegrenzungselement notwendig wäre, wie dies nach dem Stand der Technik, beispielsweise gemäß DE 37 29 145, notwendig ist.

Ferner ist im Bereich der Strecklage eines Kniehebelgetriebes die Wegübersetzung extrem niedrig, was für die vorliegende Anordnung bedeutet, dass bereits durch sehr geringe Eingangswege am Kniehebelgetriebe bzw. durch sehr geringe Drehwinkel des Momentenwiderlagers der Hinterradbremse große Ausgangswege bzw. große Ausgangsdrehwinkel erreicht werden. Hierdurch erhöht sich entscheidend die Ansprechgeschwindigkeit des gesamten Bremssystems, Massenträgheitskräfte werden verringert und eventuelle Resonanzen in unschädliche, erheblich höhere Frequenzbereiche verlagert.

Es ist zur Verwirklichung der Erfindung unerheblich, wo am Zweirad das Kniehebelgetriebe angeordnet ist. So ist es prinzipiell denkbar, das Kniehebelgetriebe an beliebiger Stelle innerhalb der Kraftübertragungseinrichtung zwischen Hinterradbremse und Vorderradbremse anzuordnen. Gemäß einer bevorzugten Ausführungsform der Erfindung ist jedoch das Kniehebelgetriebe im Bereich des Hinterrads des Zweirads angeordnet. Diese Anordnung führt zu einem einfachen Aufbau, insbesondere da es auf diese Weise möglich ist, das Momentenwiderlager der Hinterradbremse unmittelbar mit dem Kniehebelgetriebe zu verbinden.

Gemäß einer weiteren bevorzugten Ausführungsform der Erfindung ist dabei das Hauptlager des Kniehebelgetriebes auf einem Hilfsträger angeordnet. Besonders bevorzugt ist der Hilfsträger dabei zudem nicht fest mit dem Fahrzeugrahmen verbunden, sondern stützt sich translatorisch an der Hinterachse sowie rotatorisch am Fahrzeugrahmen ab. Dies ist insbesondere insofern vorteilhaft, als damit die Montage und Justage der Bremsanlage sowie der Ein- und Ausbau des Hinterrads erheblich erleichtert werden.

Nach einer weiteren, bevorzugten Ausführungsform der Erfindung umfasst die Kombinationsbremsanlage einen einstellbaren Anschlag, mit dem sich die Ausgangsstellung des Kniehebelgetriebes justieren lässt. Auf diese Weise kann die Kombinationsbremsanlage an zentraler Stelle mittels des einstellbaren Anschlags noch an unterschiedliche Gegebenheiten, wie beispielsweise die vorliegenden Bremsenkennlinien, angepasst werden. Besonders bevorzugt ist dabei der einstellbare Anschlag am Hilfsträger angeordnet. Damit besteht eine besonders hohe Sicherheit gegen unbeabsichtigtes Verstellen der Bremsanlage und es wird ein einfacher und robuster Aufbau ermöglicht.

Nach einer weiteren bevorzugten Ausführungsform der Erfindung umfasst die Kombinationsbremsanlage eine auf das Kniehebelgetriebe wirkende Rückstellfeder. Die Rückstellfeder unterstützt die Rückstellung der gesamten Bremsanlage nach einem Bremsvorgang, einschließlich des Momentenwiderlagers der Hinterradbremse, in die Ausgangs- bzw. Neutralstellung. Besonders bevorzugt greift dabei die Rückstellfeder ebenfalls am Hilfsträger an, was wiederum den Aufbau der Bremsanlage vereinfacht und deren Zuverlässigkeit und Ausfallsicherheit erhöht.

Im Folgenden wird die Erfindung anhand lediglich Ausführungsbeispiele darstellender Zeichnungen näher erläutert.

Es zeigen:
- **Fig. 1**: in schematischer seitlicher Darstellung ein mit einer Ausführungsform der erfindungsgemäßen Kombinationsbremse ausgestattetes Fahrrad;
- **Fig. 2**: in schematischer seitlicher Detaildarstellung den Bereich des Kniehebelgetriebes des Fahrrades gemäß **Fig. 1**; und
- **Fig. 3**: in einer **Fig. 2** entsprechenden Darstellung den Bereich des Kniehebelgetriebes gemäß **Fig. 2** in Draufsicht.

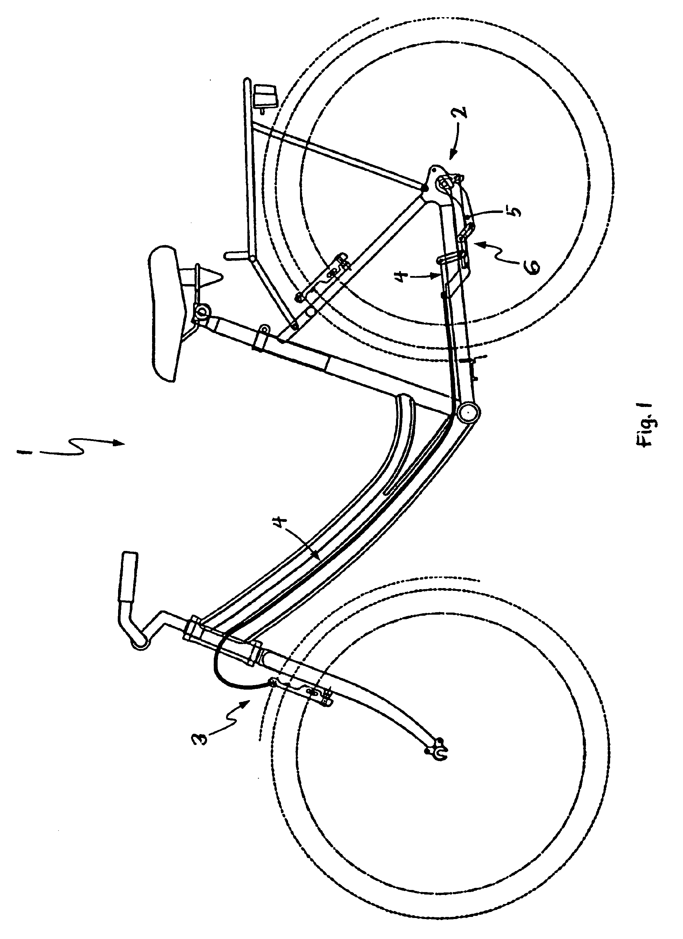

**Fig. 1** zeigt ein für sich genommen bekanntes Fahrrad 1 mit einer Hinterrad-Nabenbremse bei 2 sowie einer Vorderrad-Felgenbremse 3. Als Besonderheit ist das in **Fig. 1** gezeigte Fahrrad jedoch mit einer Ausführungsform der erfindungsgemäßen Kombinationsbremsanlage ausgestattet. Die Kombinationsbremsanlage verbindet die Hinterradbremse 2 über den Bowdenzug 4 mit der Vorderradbremse 3.

Dies bedeutet mit anderen Worten zunächst, dass zur Einleitung eines Bremsvorgangs vom Fahrer des Fahrrads 1, beispielsweise über einen nicht dargestellten Handbremshebel und einen ebenfalls nicht dargestellten weiteren Bowdenzug, lediglich die Hinterradbremse 2 betätigt werden muss. Das bei der damit eingeleiteten Bremsung des Hinterrades anfallende Bremsmoment wird über den Momentenhebel 5 der Hinterradbremse 2 sowie über das gestreckte Kniehebelgetriebe 6 auf den Bowdenzug 4 übertragen. Somit wird die Vorderradbremse 3 durch die aus dem Bremsmoment der Hinterradbremse 2 abgeleiteten Kräfte betätigt.

Sollte dabei durch zu starkes Bremsen die Gefahr des Abhebens des Hinterrads drohen, was bei Fahrrädern mit konventionellen Bremsen bekanntermaßen sogar bis zu einem Überschlag des Fahrers über den Lenker führen kann, so wird dadurch zunächst das am Hinterrad anfallende Bremsmoment herabgesetzt bzw. bis auf Null reduziert. Damit entfällt jedoch auch die aus dem Bremsmoment des Hinterrads abgeleitete Betätigungskraft für die Vorderradbremse 3, wodurch der drohende Überschlag mit großer Sicherheit verhindert werden kann.

Durch die reduzierte Bremskraft am Vorderrad gelangt wieder mehr Gewicht auf das Hinterrad, wodurch auch das an der Hinterradbremse 2 anfallende Bremsmoment und die daraus abgeleitete Bestätigungskraft der Vorderradbremse 3 ansteigt. Dieser Regelkreis zwischen Bremsmoment am Hinterrad und Betätigungskraft für die Vorderradbremse 3 führt bei einem mit einer derartigen Kombinationsbremse ausgestatteten Zweirad zu einem ABS-Effekt ähnlich wie bei den aus dem Kraftfahrzeugbau bekannten Antiblockiersystemen.

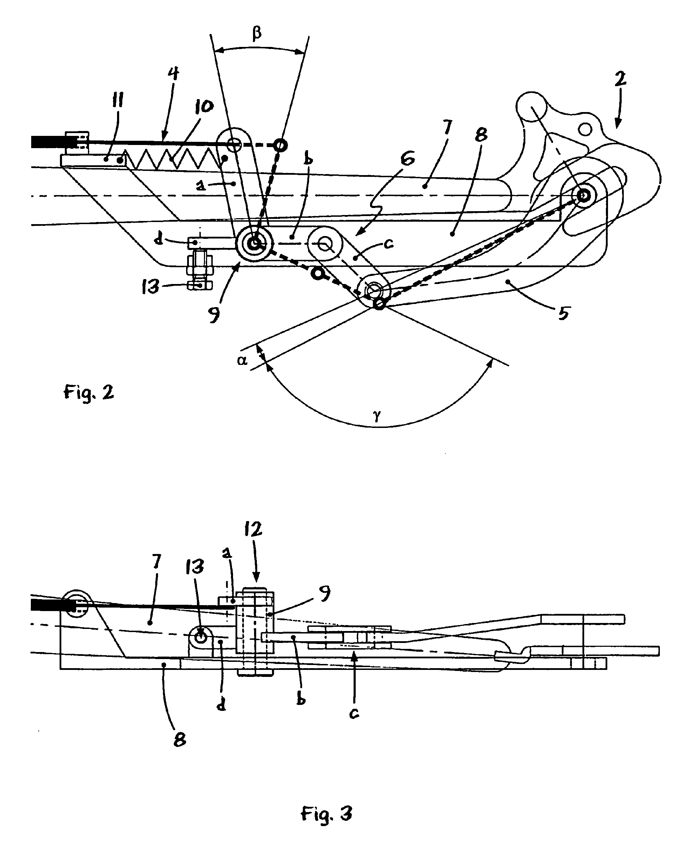

**Fig. 2** zeigt in vergrößerter Darstellung die Tretlagerstrebe 7 des Fahrrads 1 gemäß **Fig. 1**, sowie den in diesem Bereich angeordneten Hilfsträger 8, den Momentenhebel 5 der nicht eigens dargestellten Hinterrad-Nabenbremse bei 2 sowie das mittels der Lagerung 9 mit dem Hilfsträger 8 verbundene Kniehebelgetriebe 6 mit den Hauptbestandteilen *a, b, c, d.*

Man erkennt den Betrieb des Kniehebelgetriebes 6 nahe seiner Strecklage, die in **Fig. 2** mittels strichlierter Linien angedeutet ist. Dies bedeutet einerseits eine extrem hohe Kraftübersetzung und andererseits eine extrem niedrige Wegübersetzung zwischen dem Momentenhebel 5 der Hinterradbremse 2 und dem zur Vorderradbremse 3 führenden Bowdenzug 4.

Mit anderen Worten bedeutet dies, dass von den zuweilen extrem hohen, am Momentenhebel 5 anfallenden Bremsreaktionsmomenten bzw. -kräften aufgrund der weitgehend gestreckten Lage des Kniehebelgetriebes 6 sowie aufgrund des unter Winkel γ nicht rechtwinkligen Kraftangriffs des Momentenhebels 5 am Kniehebelgetriebe 6 nur ein kleiner Bruchteil auf den Bowdenzug 4 geleitet wird. Dies ist insbesondere bei den modernen Vorderrad-Felgenbremsen von großer Bedeutung, die mit lediglich sehr geringen Betätigungskräften bereits eine erhebliche Bremswirkung erzielen.

Außerdem legt der Momentenhebel 5 der Hinterradbremse 2 zwischen der Ausgangsstellung und der maximalen Streckstellung des Kniehebelgetriebes 6 lediglich einen äußerst geringen Weg bzw. Winkel α zurück, was wegen der damit verbundenen geringen Massenträgheitskräfte ebenfalls der Sicherheit gegen Ruckeln und Aufschwingen der Bremsanlage dient. Der Betätigungshebel α, mit dem das Kniehebelgetriebe 6 den Bowdenzug 4 betätigt, legt bei der Bewegung des Momentenhebels 5 um den Winkel α den um ein mehrfaches größeren Betätigungswinkel β zurück, womit sich übliche Vorderradbremsen 3, insbesondere Felgenbremsen, problemlos betätigen lassen.

Der Betrieb des Kniehebelgetriebes 6 im Bereich seiner Streckstellung gemäß **Fig. 2** führt außerdem auf denkbar einfachste Weise und ohne zusätzliche Baugruppen zu einer äußerst effektiven Kraftbegrenzung in Bezug auf die Betätigungskräfte der Vorderradbremse. Denn in der Streckstellung des Kniehebelgetriebes 6, die in **Fig. 2** mittels strichlierter Linien angedeutet ist, führt weitere Kraftzunahme am Momentenhebel 5 der Hinterradbremse 2 zu keinerlei weiterer Zunahme der in den Bowdenzug 4 der Vorderradbremse 3 eingeleiteten Kräfte.

Mit anderen Worten wird durch die Kraftübertragung von der Hinterradbremse 2 auf die Vorderradbremse 3 mittels des Kniehebelgetriebes 6 sowohl ein feinfühliges Ansprechen der gesamten Bremsanlage bei leichten Bremsungen als auch die erwünschte Kraftbegrenzung und Schwingungsunterdrückung bei starken Bremsungen erzielt. Zudem können durch das Kniehebelgetriebe 6 auch extreme Kraftspitzen, die insbesondere bei Rücktrittbremsen am Momentenhebel 5 durchaus auftreten können, ohne jedes Problem unmittelbar in den Hilfsträger 8 und über die Stütze 11 unmittelbar in den Hinterbau 7 des Fahrrads 1 eingeleitet werden. Ferner findet in der Streckstellung auch keinerlei Rückwirkung der Vorderradbremse auf die Hinterradbremse statt, was ebenfalls der Unterbindung von unerwünschten Schwingungen dient.

Zur Unterstützung der Rückstellbewegung ist parallel zum Ende des Bowdenzugs 4 eine Rückstellfeder 10 zwischen Hilfsträger 8 und Betätigungshebels α des Kniehebelgetriebes 6 angeordnet.

**Fig. 3** zeigt die Anordnung gemäß Fig. 2 in der Draufsicht. Man erkennt die Kettenstrebe 7 des Fahrradrahmens und den in diesem Bereich angeordneten Hilfsträger 8. Auf dem Hilfsträger 8 ist der Lagerbolzen 12 angeordnet, der wiederum die Lagerhülse 9 trägt, auf der die beiden Hebel *a* und *b* des Kniehebelgetriebes winkelfest zueinander angeordnet sind. Ferner geht aus **Fig. 3** hervor, dass das Verbindungsglied *c* doppellaschig bzw. ähnlich wie ein Kettenglied ausgeführt ist, um die Entstehung von Biegemomenten zu verhindern.

Schließlich erkennt man aus der Darstellung der **Fig. 3** in Zusammenschau mit Fig. 2 Ausführung und Funktion der weiteren, ebenfalls auf der Hülse 3 angeordneten Anschlagslasche d, die zusammen mit der Einstellschraube 13 dazu dient, die Grundstellung des Kniehebelgetriebes 6 zu justieren.

Im Ergebnis wird somit erkennbar, dass die erfindungsgemäße Kombinationsbremsanlage insbesondere dank ihres im Bereich der Strecklage betriebenen Kniehebelgetriebes auf äußerst einfache Weise Betriebssicherheit, Antiblockier-Effekt und Schwingungsunterdrückung kombiniert. Gegenüber den bekannten, nach dem Stand der Technik häufig kompliziert aufgebauten, verhältnismäßig störungsanfälligen sowie wartungsintensiven Kombinationsbremsanlagen bietet die erfindungsgemäße Kombinationsbremsanlage aufgrund ihrer Zuverlässigkeit bei gleichzeitig einfachem Aufbau erhebliche Potenziale für den Einsatz in verschiedensten Fahrradkategorien.

## Patentansprüche

1. Kombinationsbremsanlage für Zweiräder (1) mit einer manuell betätigbaren, am Hinterrad angeordneten Nabenbremse (2) und mit einer durch das Bremsmoment der Hinterradnabenbremse (2) betätigbaren Vorderradbremse (3),
**dadurch gekennzeichnet,**
**dass** die Kraftübertragung vom Momentenwiderlager (5) der Hinterradbremse (2) zur Vorderradbremse (3) über ein degressives, im Bereich nahe seiner Strecklage befindliches Kniehebelgetriebe (6) erfolgt.

2. Kombinationsbremsanlage nach Anspruch 1,
**dadurch gekennzeichnet,**
**dass** das Kniehebelgetriebe (6) im Bereich des Hinterrades angeordnet ist.

3. Kombinationsbremsanlage nach Anspruch 1 oder 2,
**dadurch gekennzeichnet,**
**dass** das Hauptlager (9) des Kniehebelgetriebes (6) auf einem Hilfsträger (8) angeordnet ist.

4. Kombinationsbremsanlage nach Anspruch 3,
**dadurch gekennzeichnet,**
**dass** der Hilfsträger (8) nicht fest mit dem Fahrzeugrahmen (7) verbunden ist, wobei sich der Hilfsträger (8) translatorisch an der Hinterradachse und rotatorisch am Fahrzeugrahmen (7) abstützt.

5. Kombinationsbremsanlage nach einem der Ansprüche 1 bis 4,
**gekennzeichnet durch**
einen einstellbaren Anschlag (13, d) zur Justage der Ausgangsstellung des Kniehebelgetriebes (6).

6. Kombinationsbremsanlage nach Anspruch 5,
**dadurch gekennzeichnet,**
**dass** der einstellbare Anschlag (13, d) am Hilfsträger (8) angeordnet ist.

7. Kombinationsbremsanlage nach einem der Ansprüche 1 bis 6,
**gekennzeichnet durch**
eine auf das Kniehebelgetriebe (6) wirkende Rückstellfeder (10).

8. Kombinationsbremsanlage nach Anspruch 7,
**dadurch gekennzeichnet,**
**dass** die Rückstellfeder (10) am Hilfsträger (8) angreift.

## Claims

1. A combination brake system for two-wheeled vehicles (1) with a manually actuated hub brake (2) that is arranged on the rear wheel and a front-wheel brake (3) that can be actuated with the braking torque of the rear-wheel hub brake (2),
**characterized in that**
the power transmission from the torque lever (5) of the rear-wheel brake (2) to the front-wheel brake (3) is realized by means of a degressive toggle mechanism (6) that operates near its extended position.

2. The combination brake system according to Claim 1,
**characterized in that**
the toggle mechanism (6) is arranged in the region of the rear wheel.

3. The combination brake system according to Claim 1 or 2,
**characterized in that**
the main bearing (9) of the toggle mechanism (6) is arranged on an auxiliary bracket (8).

4. The combination brake system according to Claim 3,
**characterized in that**
the auxiliary bracket (8) is not rigidly connected to the vehicle frame (7), wherein the auxiliary bracket (8) is supported on the rear wheel axle in a translatory fashion and on the vehicle frame (7) in a rotatory fashion.

5. The combination brake system according to one of Claims 1 to 4,
**characterized in that**
an adjustable limit stop (13, d) is provided in order to adjust the home position of the toggle mechanism (6).

6. The combination brake system according to Claim 5,
**characterized in that**
the adjustable limit stop (13, d) is arranged on the auxiliary bracket (8).

7. The combination brake system according to one of Claims 1 to 6,
**characterized in that**
a pull-back spring (10) acts upon the toggle mechanism (6).

8. The combination brake system according to Claim 7,
**characterized in that**
the pull-back spring (10) engages on the auxiliary bracket (8).

## Revendications

1. Dispositif de freinage combiné pour deux-roues (1) avec un frein sur moyeu (2) actionnable manuellement, monté sur la roue arrière, et avec un frein de roue avant (3) actionnable par le couple de freinage du frein sur moyeu de roue arrière (2), **caractérisé en ce que** la transmission de force depuis le palier de butée de couple (5) du frein de roue arrière (2) vers le frein de roue avant (3) s'effectue par un mécanisme à levier coudé (6) dégressif se trouvant à proximité de sa position étirée.

2. Dispositif de freinage combiné selon la revendication 1, **caractérisé en ce que** le mécanisme à levier coudé (6) est disposé dans la zone de la roue arrière.

3. Dispositif de freinage combiné selon la revendication 1 ou 2, **caractérisé en ce que** le palier principal (9) du mécanisme à levier coudé (6) est disposé sur un support auxiliaire (8).

4. Dispositif de freinage combiné selon la revendication 3, **caractérisé en ce que** le support auxiliaire (8) n'est pas lié de manière fixe avec le cadre du véhicule (7), le support auxiliaire (8) s'appuyant en translation sur l'essieu de roue arrière et en rotation sur le cadre du véhicule (7).

5. Dispositif de freinage combiné selon l'une quelconque des revendications 1 à 4, **caractérisé par** une butée réglable (13, d) pour l'ajustement de la position initiale du mécanisme à levier coudé (6).

6. Dispositif de freinage combiné selon la revendication 5, **caractérisé en ce que** la butée réglable (13, d) est disposée sur le support auxiliaire (8).

7. Dispositif de freinage combiné selon l'une quelconque des revendications 1 à 6, **caractérisé par** un ressort de rappel (10) agissant sur le mécanisme à levier coudé (6).

8. Dispositif de freinage combiné selon la revendication 7, **caractérisé en ce que** le ressort de rappel (10) est appliqué sur le support auxiliaire (8).
